# EUROPÄISCHE PATENTSCHRIFT

(11) **EP 1 242 171 B1**
(45) Veröffentlichungstag und Bekanntmachung des Hinweises auf die Patenterteilung: **09.07.2003**
(21) Anmeldenummer: 00990756.9
(22) Anmeldetag: 14.12.2000
(51) Int. Cl.: B01F 5/06, B01J 19/00

(54) **MIKROVERMISCHER**
MICROMIXER
MICROMELANGEUR

(30) Priorität: 18.12.1999 DE 19961257
(43) Veröffentlichungstag der Anmeldung: 25.09.2002
(73) Patentinhaber: INSTITUT FÜR MIKROTECHNIK MAINZ GmbH, 55129 Mainz-Hechtsheim (DE)
(72) Erfinder: EHRFELD, Wolfgang, 55124 Mainz (DE); HESSEL, Volker, 65510 Hünstetten-Wallbach (DE)
(74) Vertreter: Fuchs Mehler Weiss & Fritzsche
(86) Internationale Anmeldenummer: EP0012736
(87) Internationale Veröffentlichungsnummer: WO01043857

(56) Entgegenhaltungen:
- EP-A- 0 928 785
- WO-A-94/21372
- US-A- 5 887 977
- SCHUBERT K: "HIGH POTENTIALS. MIKROSTRUKTURAPPARATE FUER DIE CHEMISCHE UND THERMISCHE VERFAHRENSTECHNIK" , CHEMIE. INGENIEUR. TECHNIK,DE,VERLAG CHEMIE GMBH. WEINHEIM, PAGE(S) 124-126,128 XP000700153 ISSN: 0009-286X Abbildung 3

## Beschreibung

Die Erfindung betrifft einen statischen Mikrovermischer gemäß dem Oberbegriff des Patentanspruchs 1. Die Erfindung betrifft auch einen statischen Mikrovermischer gemäß dem Oberbegriff des Patentanspruchs 15.

Mikrovermischer bilden eine Hauptkomponente sogenannter Mikroreaktoren, die über dreidimensionale Mikrostrukturen in fester Matrix verfügen, in denen chemische Umsetzungen durchgeführt werden. Wachsende Bedeutung erlangen die Mikroreaktoren beispielsweise in der kombinatorischen Chemie für die Erzeugung von Emulsionen und Gas/flüssig-Dispersionen und in der Gasphasen-Katalyse.

Im Mikrovermischer werden typischerweise mindestens zwei Fluide aus ihren jeweiligen Zuführkammern durch eine jeweils zugeordnete Schar von Mikrokanälen in räumlich getrennte Fluidströme aufgeteilt, die dann als Fluidstrahlen mit für das jeweilige Fluid gleichen Volumenströmen in eine Misch- oder Reaktionskammer austreten. Jeder Fluidstrahl wird benachbart zu einem Strahl eines anderen Fluids in die Misch- und Reaktionskammer geführt, in der durch Diffusion und/oder Turbulenz die Vermischung stattfindet. Hierbei kommt es darauf an, daß durch die Mikrokanäle identische Volumenströme je eines Fluids in die Misch- oder Reaktionskammer eingeleitet werden, weil andernfalls in der Misch- oder Reaktionskammer räumlich unterschiedliche Mischverhältnisse herrschen würden, die das Misch- oder Reaktionsergebnis verfälschen. Da die Volumenströme durch Druckverluste in den Mikrokanälen beeinflußt werden, müssen die Mikrokanalsysteme derart ausgestaltet werden, daß alle Mikrokanalzweige einen gleichen - und idealerweise niedrigen Druckverlust aufweisen.

Aus der WO 95/30476 ist ein statischer Mikrovermischer bekannt, der eine Mischkammer und ein Führungsbauteil für die getrennte Zufuhr der zu mischenden Stoffe vorsieht. Das Führungsbauteil besteht aus plattenartigen Elementen in Form von dünnen Folien mit jeweils einer Schar paralleler, geradliniger Nuten, wobei diese plattenartigen Elemente übereinandergeschichtet sind. Die Nuten der übereinanderliegenden Folien weisen eine zur Mikro-Vermischer-Längsachse abwechselnde Schräge auf, so daß die an die Mischkammer angrenzenden Öffnungen der Kanäle fluchtend übereinanderliegen und an der Fluideintrittsseite hin zu getrennten Eintrittskammern divergieren. Die Kanäle des Führungsbauteils weisen jeweils die gleiche Länge und damit den gleichen Strömungswiderstand auf. Da die Fluide aber aufgrund der schrägen Anordnung der Mikrokanäle zu unterschiedlichen Seiten gerichtet in die Mischkammer einströmen, ist die Mischungseffektivität an den Randzonen aufgrund des Wandreibungseinflußes der Mischkammer geringer als im Zentrum.

Zur Erhöhung der örtlichen Effektivität der Vermischung wird in der DE 195 40 292 C1 vorgeschlagen, daß die jeweiligen Scharen von Nuten in den übereinandergeschichteten Folien jeweils bogenförmig gekrümmt und abwechselnd von der Mischkammer zu je einer der beiden Zufuhrkammern verlaufen, so daß alle Nuten parallel zueinander ausgerichtet in die Mischkammer münden. Zur Erzielung gleicher Strömungswiderstände wird angegeben, die Seiten des Führungsbauteils, die an die Zuführkammern grenzen, gegenüber der an die Mischkammer grenzende Seite so zu neigen, daß die Kanäle eine annähernd gleiche Länge aufweisen. Zur Vermeidung gekrümmter Eintrittsflächen wird angegeben, die Flächen entsprechend einer nach einer angegebenen Formel zu bestimmenden Näherungsgerade auszurichten. Diese erlaubt jedoch nur kleine Bogenwinkel der Nuten, so daß eine Anordnung der Zuführkammern an zwei sich gegenüberliegenden Seiten des Führungsbauteils oder eine getrennte Zufuhr von mehr als zwei Fluiden kaum realisierbar ist.

Die bekannten Mikrokanalsysteme haben den Nachteil, daß spezielle Zuführkammern erforderlich sind und daß alle von den jeweiligen Zuführkammern abgehenden Mikrokanäle gleichmäßig mit dem jeweiligen Fluid versorgt werden müssen, d.h., daß eine Homogenisierung des Strahldrucks der einströmenden Fluide erforderlich ist. Hierzu sind ausgedehnte Zuführkammern vorzusehen, was zu Platzproblemen führen kann und die Fluidverweilzeit erhöht. Trotz dieser Zuführkammern ist eine Homogenisierung des Strahldrucks nur über einen begrenzten Druckbereich und somit Volumenstrombereich gewährleistet.

In der DE 35 46 091 C2 wird ein Querstrommikrofilter beschrieben, dem ein Zuströmverteiler und ein Konzentratsammler vor- bzw. nachgeschaltet ist. Ein solcher Zuströmverteiler kann in Form einer Bifurkationsstruktur aufgebaut sein, wobei eine der Anzahl der Bifurkationskaskaden entsprechende Anzahl von gekrümmten Trennwänden zur Bildung der Bifurkationsstruktur erforderlich ist.

In "A Microflow Reactor for two Dimensional Investigations of In Vitro-Amplification-Systems" in Microreaction Technology; proceedings of the first international conference on microreaction technology (Editor: W. Ehrfeld), Springer 1998, wird ein Mikroreaktor vorgestellt, der in einer Zuführschicht eine Sammelkammer aufweist, in die gegenüberliegend zwei Bifurkationskaskaden einmünden, durch die ein Fluid eingeleitet wird. Von dort aus gelangt das Fluid über eine Druckbarriere in eine Reaktionskammer.

In Chemische Technik 26, Jg. 1997, Nr. 1, S. 131-134 werden Mikroreaktoren für die Chemie beschrieben, die für die Zufuhr der Reaktanten mehrere übereinanderliegende Platten mit Nutenstruktur aufweisen. Hinter dem Reaktions- und Mischbereich ist nach Durchlaufen einer Wärmetauscherstrecke eine Bifurkationskaskade für den Zusammenfluß der einzelnen Ströme vorgesehen.

Aufgabe der Erfindung ist es, einen Mikrovermischer mit Mikrokanälen zu schaffen, an deren Ausgang je Fluid identische Volumenströme vorliegen, wobei sich der Mikrovermischer durch eine einfache und kompakte Bauweise auszeichnen soll.

Diese Aufgabe wird dadurch gelöst, daß die Zufiihrelemente keilförmige Platten sind, die mindestens zu einem Ringsektor zusammensetzbar sind, der die Mischkammer bogenförmig umgibt, und daß die für jedes Fluid vorgesehenen Mikrokanäle eine symmetrische mindestens zwei Stufen i (i = 1 bis n, mit n ≥ 2) umfassende Bifurkationskaskade bilden.

Diese Aufgabe wird außerdem dadurch gelöst, daß die Zuführelemente plane Platten sind, die im mittleren Bereich eine Durchbrechung aufweisen, in die die Mikrokanäle einmünden, so daß die übereinander gestapelten Platten die Mischkammer bilden, und daß die für jedes Fluid vorgesehenen Mikrokanäle eine oder mehrere symmetrische, mindestens zwei Stufen i (i = 1 bis n, mit n ≥ 2) umfassende Bifurkationskaskaden bilden.

Die sukzessive Aufteilung eines Fluidstroms in zwei gleiche Teilströme, die ihrerseits in 2 + 2 = 4 gleiche Teilströme aufgeteilt und stufenweise entsprechend weiter aufgeteilt werden, hat zur Folge, daß alle Ströme eines Fluids den gleichen Bedingungen unterworfen sind und somit auch je Fluid identische Volumenströme in die Misch- oder Reaktionskammer austreten. Das Aufteilen in Teilströme, die alle möglichst gleichen Bedingungen unterworfen sind, gelingt über das Verringern der Querschnitte der Mikrokanäle von Stufe zu Stufe. Das Verringern der Querschnitte kann je nach Flächenform über die Reduzierung der Breite und/oder Tiefe erfolgen oder bei runden Querschnitten über die Reduzierung des Radius. Gerade bei keilförmigen Platten als Zuführelementen bietet es sich an, die Tiefe zu variieren, da auf diese Weise das als Zuführelement zur Verfügung stehende Volumen gut genutzt wird. Daß außerdem alle Teilströme eines Fluids aus einer Vorratskammer gespeist werden, trägt noch weiter zur Gleichartigkeit der Bedingungen bei.

Ein weiterer Vorteil besteht darin, daß jede Bifurkationskaskade von einem einzigen Fluidstrom (Zuführkanal) ausgeht, der mit der Vorratskammer in Verbindung steht, so daß keine räumlich ausgedehnten Zuführkammern notwendig sind. Die Zuführkanäle können weitaus besser an die jeweiligen örtlichen Bedingungen angepaßt werden, so daß ein kompakter Mikrovermischer realisiert werden kann.

Vorratskammern können außerhalb des Mikrovermischers an beliebiger Stelle und in beliebiger Anzahl angeordnet werden, so daß auch das Mischen von mehr als zwei Fluiden durchgeführt werden kann.

Zur kompakten Bauweise tragen auch die als keilförmige Platten ausgebildeten Zuführelemente bei, die zu einem Ringsektor oder gar zu einem geschlossenen Ring zusammengesetzt werden können. Da die Tiefe der Mikrokanäle in Richtung Mischkammer abnimmt, kann die Keilform optimal genutzt werden. Die Mikrokanäle mit großer Kanaltiefe bzw. Querschnittsfläche sind im dickeren Bereich der keilförmigen Platten und die Mikrokanäle mit geringer Kanaltiefe bzw. Querschnittsfläche sind im dünneren Bereich der Platten angeordnet. Dadurch können bei komplexer Bauweise die Austrittsöffnungen der Mikrokanäle der letzten Bifurkationsstufe dicht nebeneinander gelegt werden. Die Mischkammer kann rotationssymmetrisch, vorzugsweise zylinderförmig ausgebildet werden, was die Vermischung der in die Mischkammer eingeleiteten Fluide fördert.

Solche Mischkammern zylindrischer Form sind den aus den oben zitierten Schriften bisher bekannten Mischkammern darin überlegen, daß das Verhältnis von aktiver zu inaktiver Fläche größer ist und somit der Gesamtdurchsatz und die Mischeffektivität besser ist. Dabei ist mit aktiver Fläche die Fläche gemeint, aus der Fluidströme austreten, und mit inaktiver Fläche die Fläche, aus der keine Fluidströme austreten. Bei den herkömmlichen, rechteckigen Mischkammern wird nämlich eine von sechs Seiten zur Zufuhr von Fluiden genutzt, während bei der zylindrischen Mischkammer die gesamte Mantelfläche genutzt werden kann.

Durch den gleichzeitigen Einsatz von Bifurkationskaskaden als Fluidführungsstruktur und keilförmigen Platten als Zuführelemente ergibt sich ein Mikrovermischer für die Durchführung von Reaktionen, deren Selektivität und Reproduzierbarkeit sensitiv von der Mischgüte abhängen.

Der Druckverlust innerhalb der Mikrokanäle i-ter Stufe (i = 1 bis n, n ≥ 2) kann weiter minimiert werden, indem man die geometrischen Abmessungen der Mikrokanäle unterschiedlicher Stufe relativ zueinander verändert. Man kann die Länge der Mikrokanäle zur Mischkammer hin verkürzen (L_{i + 1} < Lᵢ mit Lᵢ = Länge der Mikrokanäle der i-ten Stufe), wobei sich als vorteilhaft erwiesen hat, die Längen derart zu wählen, daß das Verhältnis der Längen zweier aufeinanderfolgenden Stufen konstant ist. Solche Bifurkationskaskaden werden als selbstähnlich bezeichnet.

Besonders in Fällen, in denen die Anzahl n der Stufen größer oder gleich 3 ist, besteht eine bevorzugte Ausführungsform darin, die Abmessungen der Mikrokanäle nur bis zur vorletzten Stufe von Stufe zu Stufe zu reduzieren. Die Bifurkationskaskade kann dabei bis zur vorletzten Stufe selbstähnlich sein.

Vorzugsweise weist mindestens eine keilförmige Platte auf mindestens einer Keilfäche Mikrokanäle bildende Nuten auf. Der Mikrovermischer kann aus mehreren identischen keilförmigen Platten zusammengesetzt werden, so daß die Herstellungskosten gesenkt werden können.

Gemäß einer weiteren Ausführungsform weist die keilförmige Platte auf beiden Keilflächen jeweils eine Bifurkationskaskade auf, wobei die an der Stirnseite der keilförmigen Platte mündenden Mikrokanäle der letzten Bifurkationsstufe möglichst in Umfangrichtung der Mischkammer versetzt zueinander angeordnet sind, um den Abstand zu minimieren.

Bei einer weiteren bevorzugten Ausführung hat die keilförmige Platte auf beiden Keilflächen Nuten, die einen Teilquerschnitt der Mikrokanäle aufweisen. Dabei ergänzen die in den aufeinanderliegenden Flächen befindlichen Nuten zweier nebeneinander liegender Zuführelementen sich zum Vollquerschnitt der Mikrokanäle. Auch in dieser Ausführung kann der Mikrovermischer aus mehreren identischen keilförmigen Platten zusammengesetzt werden, was zur Senkung der Herstellungskosten führt. Auf diese Weise lassen sich ansonsten schwierig herzustellende, strömungsgünstige Rundquerschnitte erzeugen.

In einer weiteren Ausführungsform sind die Mikrokanäle derart gestaltet, daß die Breite und/oder Tiefe sowie ggf. auch die Länge der n-ten Stufe, d.h. der letzten Stufe vor dem Einmünden in die Mischkammer, größer ist als in der Stufe davor (Stufe n-1), d.h. vorletzten Stufe. Dadurch erreicht man ein höheres Verhältnis von aktiver zu inaktiver Fläche bezogen auf die Mantelfläche der Mischkammer, was zur besseren Vermischung der Fluide beiträgt. Grundsätzlich können die Nuten in den einzelnen Zuführelementen zueinander versetzt angeordnet werden und zwar derart, daß, wenn zwei Fluide A, B alternierend auf die einzelnen Zuführelemente verteilt wären, ein Teilstrom des Fluides B beim Austritt in die Mischkammer von vier Teilströmen des Fluides A umgeben ist und umgekehrt. Vergrößert man nun auf der n-ten Stufe verglichen mit Stufe n - 1 den Querschnitt der Mikrokanäle, insbesondere Breite und/oder Tiefe der Mikrokanäle, kann erreicht werden, daß die Austrittsflächen der Fluide in axialer oder Umfangsrichtung der Mischkammer überlappen. Dies erhöht bei hinreichend kleinem Abstand der Austrittsflächen zueinander die Vermischungskontaktfläche und damit auch die Vermischungseffektivität.

Vorzugsweise sind die Bifurkationskaskaden für jedes Fluid an einem gemeinsamen Zuführungskanal angeschlossen. Dies hilft, die Gleichartigkeit der äußeren Bedingungen für die Fluidströme eines Fluides zu gewährleisten und erhöht so die Reproduzierbarkeit der Mischung.

Um den Mikrovermischer möglichst kompakt bauen zu können, sind in einer bevorzugten Ausführung die gemeinsamen Zuführkanäle in Form von Bohrungen in die Zuführelemente integriert oder als Nuten in das die Zuführelemente umgebende Gehäuse eingebracht.

Die Ausführung der Zuführelemente als plane Platten mit einer Durchbrechung in ihrer Mitte, in die die Mikrokanäle münden, so daß die übereinandergestapelten Platten zusammen das Kernstück des Mikrovermischers ergeben, wobei die übereinanderliegenden Durchbrechungen die Mischkammer bilden, erlauben die Herstellung eines besonders kompakten, stabilen, einfach und kostengünstig zu produzierenden Mikrovermischers. Zu den Vorteilen der Bifurkation der Mikrokanäle wird auf die vorhergehenden Ausführungen verwiesen.

Besonders bevorzugt werden kreisringförmige Platten als Zuführelemente. Durch sie erhält man Mischkammern zylindrischer Form, die den Vorteil aufweisen, daß das Verhältnis von aktiver zu inaktiver Fläche größer ist und somit der Gesamtdurchsatz und die Mischeffektivität besser sind.

Der Druckverlust innerhalb der Mikrokanäle i-ter Stufe (i = 1 bis n, n ≥ 2) wird minimiert, indem die Länge der Mikrokanäle zur Mischkammer hin verkürzt wird (L_{i + 1} < Lᵢ mit Lᵢ = Länge der Mikrokanäle der i-ten Stufe). Dabei hat es sich als vorteilhaft erwiesen, die Längen derart zu wählen, daß das Verhältnis der Längen zweier aufeinanderfolgenden Stufen konstant ist.
Solche Bifurkationskaskaden werden als selbstähnlich bezeichnet.

Wie auch bei den keilförmigen Platten werden die Mikrokanäle vorzugsweise aus in den Platten ausgebildeten Nuten gebildet. Vorteilhafterweise sind die Mikrokanäle der einen und der anderen Seite zueinander versetzt angeordnet. Dies reduziert die Abstände und erhöht dadurch die Mischeffektivität.

In einer weiteren Ausführungsform weisen die Nuten jedes Zuführelementes einen Teilquerschnitt der Mikrokanäle auf, wobei die in den aufeinanderliegenden Flächen befindlichen Nuten sich zum Vollquerschnitt der Mikrokanäle ergänzen. Durch diese und die vorhergehenden Maßnahmen können die Herstellungskosten gesenkt werden, da der Mikrovermischer aus mehreren identischen planen Platten zusammengesetzt werden kann.

Um den Mikrovermischer noch kompakter bauen zu können, sind in einer bevorzugten Ausführungsform die Zuführkanäle für die einzelnen Bifurkationskaskaden in Form von Durchbrechungen in die Zuführelemente integriert. Dabei muß beachtet werden, daß in jeder planen Platte auch für die Zuführkanäle Durchbrechungen vorgesehen sein sollten, an denen in dieser speziellen Platte keine Bifurkationskaskade angeschlossen ist. Der Mikrovermischer kann aus identischen Zuführelementen aufgebaut werden, die gegeneinander derart verdreht sind, daß nicht nur eine durchgehende Mischkammer, sondern auch für jedes Fluid durchgehende Zuführkanäle gebildet werden.

Beispielhafte Ausführungsformen der Erfindung werden nachfolgend anhand der Zeichnungen näher erläutert:

Es zeigen:
- Figur 1a: eine perspektivische Darstellung von Zuführelementen mit auf einer Seite Mikrokanäle bildenden Nuten;
- Figur 1b: eine perspektivische Darstellung von Zuführelementen mit auf beiden Seiten Mikrokanäle bildenden Nuten;
- Figur 1c: eine weitere perspektivische Darstellung von Zuführelemnten mit auf beiden Seiten Mikrokanäle bildenden Nuten;
- Figur 2a: eine perspektivische Darstellung von in ein Gehäuse eingefügten Zuführelementen mit Zuführkanälen ober- und unterhalb der Zuführelemente;
- Figur 2b: eine perspektivische Darstellung von in ein Gehäuse eingefügten Zuführelementen mit Zuführkanälen seitlich der Zuführelemente;
- Figur 2c: eine perspektivische Darstellung von in ein Gehäuse eingefügten Zuführelementen mit Zuführkanälen, die in die Zuführelemente integriert sind;
- Figur 3a: eine Draufsicht auf zwei Zuführelemente, die als plane, kreisringförmige Platten ausgebildet sind;
- Figur 3b-d: unterschiedliche Nutenanordnungen in Zuführelementen, die als plane, kreisringförmige Platten ausgebildet sind.

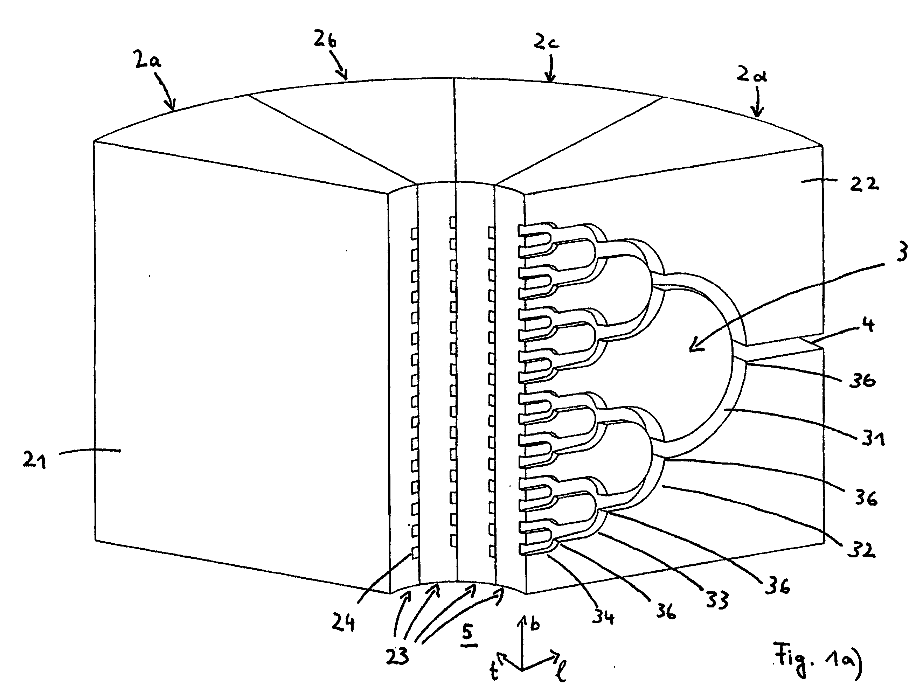

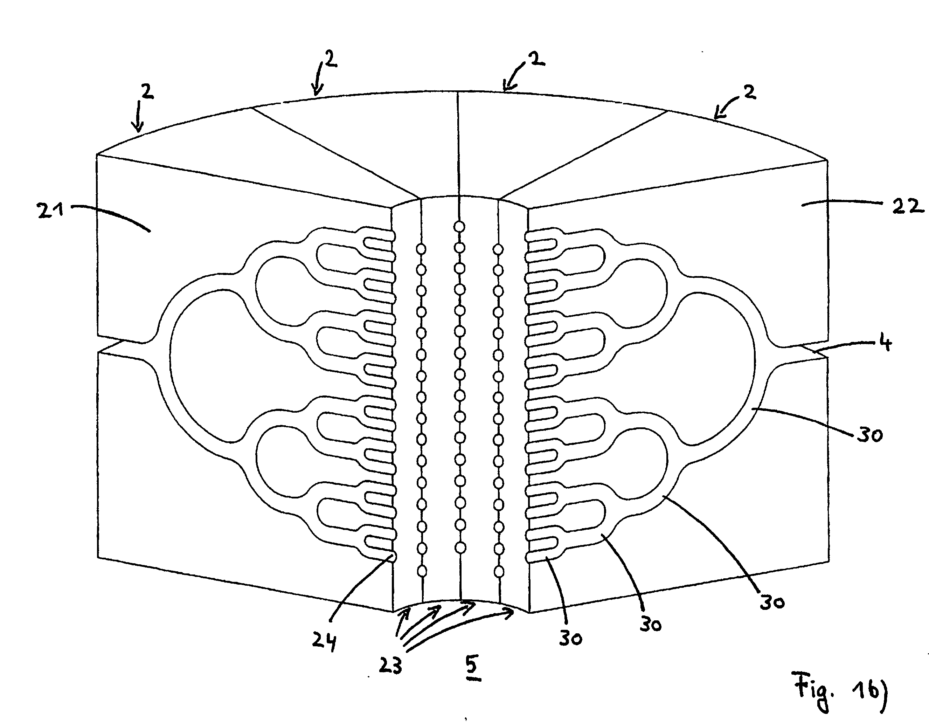

In Figur 1a sind mehrere zu einem Ringsektor aufgereihte Zuführelemente 2a - d perspektivisch dargestellt. Dadurch ergibt sich eine zylindrische Mischkammer 5, wobei die Mantelfläche durch die Stirnseiten 23 der Zuführelemente 2a-d gebildet werden. Diese Zuführelemente 2a-d sind keilförmige Platten, die auf jeweils einer Keilfläche 22 als Mikrokanäle 31 - 34 dienende Nuten 24 aufweisen. Eine glatte Keilfläche 21 deckt dabei die Mikrokanäle in der benachbarten Keilfläche 22 ab. Der Übersichtlichkeit wegen sind nur eine Nut 24 und ein Mikrokanal 31 - 34 exemplarisch bezeichnet.

Um die Keilform der Zuführelemente 2a - d optimal auszunutzen, sind Mikrokanäle 31 - 34 sowie der Zuführungskanal 4 derart ausgeführt, daß sie bei gleicher Breite unterschiedliche Tiefe vorweisen, wobei in Figur 1a der Querschnitt rechteckig ist. Nach jeder Bifurkation 36 nimmt die Tiefe von außen nach innen zur Mischkammer 5 hin ab. Die Strömungsrichtung der Fluide ist radial von außen nach innen gerichtet. Für das Keilelement 2d ist ein Koordinatensystem mit den Richtungen 1, b und t eingezeichnet. In Richtung von 1 wird die Länge eines Mikrokanals gemessen, in Richtung von b die Breite und in Richtung von t die Tiefe eines Mikrokanals.

Die Fluidführungsstruktur 3 ist im in Figur 1a dargestellten Beispiel als vierstufige Bifurkationskaskade ausgeführt. Aus einer Vorratskammer außerhalb der Vorrichtung fließt der Fluidstrom in den Zuführungskanal 4. Dieser gabelt sich in zwei Mikrokanäle 31 erster Stufe, so daß der Fluidstrom in zwei gleiche Teilströme aufgeteilt wird. Beide Mikrokanäle 31 erster Stufe gabeln sich in jeweils zwei Mikrokanäle 32 zweiter Stufe auf, was zur Folge hat, daß auf der zweiten Stufe der ursprüngliche Fluidstrom in vier Teilströme aufgeteilt ist. Diese symmetrische Bifurkation wird im gezeigten Beispiel bis zur vierten Stufe fortgesetzt und resultiert in der Aufteilung des Fluidstromes in 2ⁱ-Teilströme, die von den Mikrokanälen 34 vierter Stufe in die Mischkammer 5 münden und sich dort mit den Teilströmen aus den anderen Zuführelementen vermischen können.

In Figur 1a sind die Nuten 24 in den Zuführelementen 2a - d versetzt angeordnet und zwar derart, daß, angenommen in den Zuführelementen 2a und c fließe Fluid A und in Zuführelementen 2b und d Fluid B, ein Teilstrom des Fluides B beim Austritt in die Mischkammer 5 von vier Teilströmen des Fluides A umgeben ist und umgekehrt. Dies trägt zur besseren Vermischung beider Fluide bei.

In Figur 1b ist ein weiteres Beispiel für die Ausgestaltung der Zuführelemente 2 dargestellt. In diesem Fall sind auf beiden Teilflächen 21 und 22 Nuten 24 angebracht, die einen Teilquerschnitt der Mikrokanäle 30 aufweisen. Beim Aneinanderlegen zweier Keilflächen 21 und 22 ergänzen sich zwei gegenüberliegende Nuten 24 zum Vollquerschnitt eines Mikrokanales 30. Weiterhin ist der Querschnitt der Mikrokanäle 30 abgerundet. Da auch in diesem Fall nach innen hin die Tiefe der Mikrokanäle 30 bei konstanter Breite abnimmt, haben die Mikrokanäle 30 unmittelbar bei der Mischkammer 5 runden Querschnitt. Auch in Figur 1b sind wegen besserer Übersichtlichkeit nur eine Nut 24 und die Mikrokanäle 30 eines Teilstromes bezeichnet.

Figur 1c zeigt ein weiteres Ausführungsbeispiel der Zuführelemente 2. In diesem Fall nehmen sowohl Tiefe als auch Länge der Mikrokanäle 30 von Stufe i auf Stufe i + 1 zu, aber von Stufe n - 1 auf Stufe n, d.h. der letzten Stufe vor Einmünden in die Mischkammer 5, nehmen beide Abmessungen wieder zu. Dies ist auch in der Vergrößerung des aufgeschnittenen Zuführelementes 2' dargestellt. Das Zuführelement 2' ist längs der Schnittfläche 25 derart aufgeschnitten, daß ein Mikrokanal 30 auf konstant halber Breite durchgeschnitten wird. Tiefe und Länge des Mikrokanals vierter Stufe 34 sind deutlich größer als Tiefe und Länge des Mikrokanals dritter Stufe 33. Daher ergibt sich für die Mischkammer ein höheres Verhältnis von Fluidaustrittsfläche zu Gesamtmantelfläche, was die Vermischungseffektivität steigert. Die einzelnen Nuten 24 sind wie in Figur 1a derart zueinander angeordnet, daß ein Teilstrom eines Fluides von vier Teilströmen eines weiteren Fluides umgeben sein kann. Durch die große Tiefe der Mikrokanäle vierter Stufe 34 ergibt sich ein Überlappen der Austrittsflächen in Umfangsrichtung der Mischkammer. Dies erhöht die Vermischungskontaktfläche der in die Mischkammer 5 austretenden Fluide und damit auch die Vermischungseffektivität.

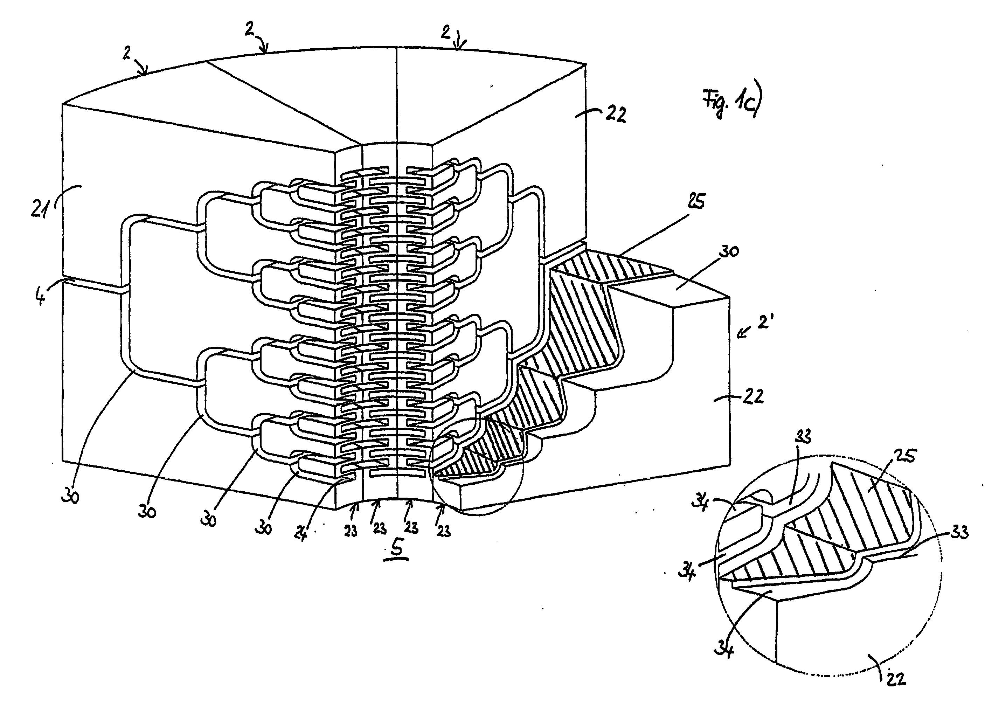

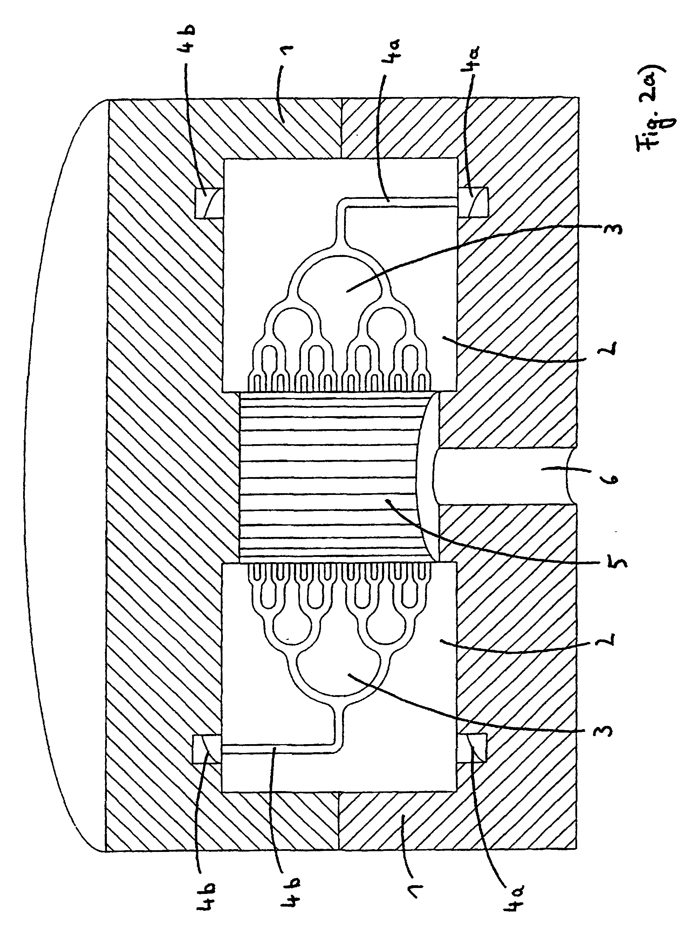

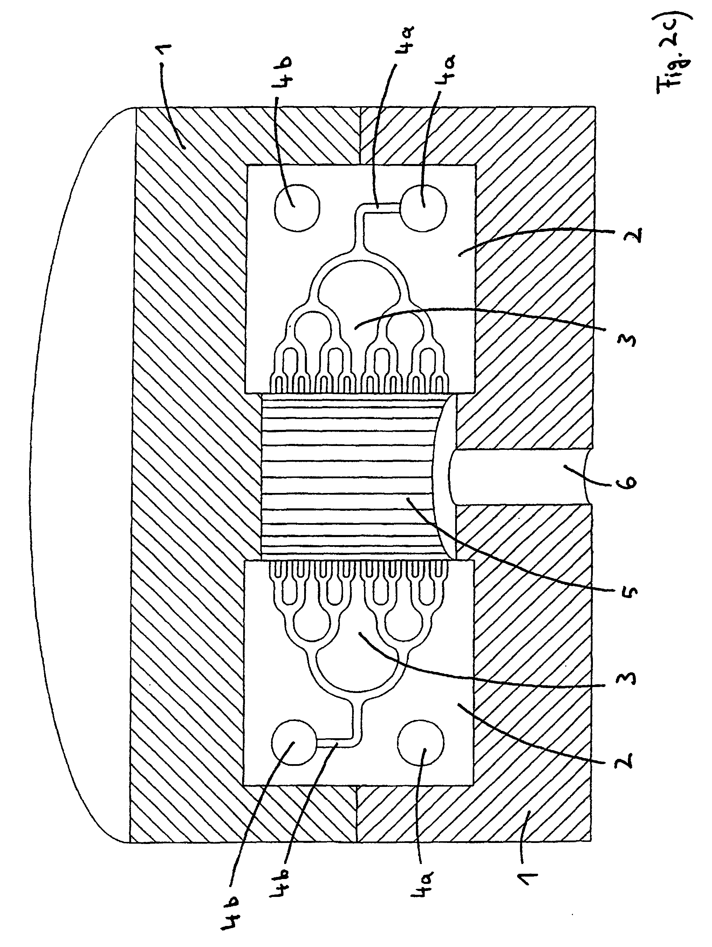

In Figur 2a sind die Zuführelemente 2 in das Gehäuse 1 eingepaßt, wobei das Gehäuse 1 aus zwei Kreisscheiben besteht, in die Aussparungen zum Einsetzen der Zuführelemente 2 und zum Bilden der Mischkammer 5 eingearbeitet sind, Zuführkanäle 4a und b, sind oberhalb und unterhalb der Zuführelemente 2 ringförmig im Gehäuse 1 umlaufend angeordnet in einer der beiden Kreisscheiben ist ein Fluidabführungskanal 6 derart angeordnet, daß er zentral in die untere Stirnseite der Mischkammer 5 mündet.

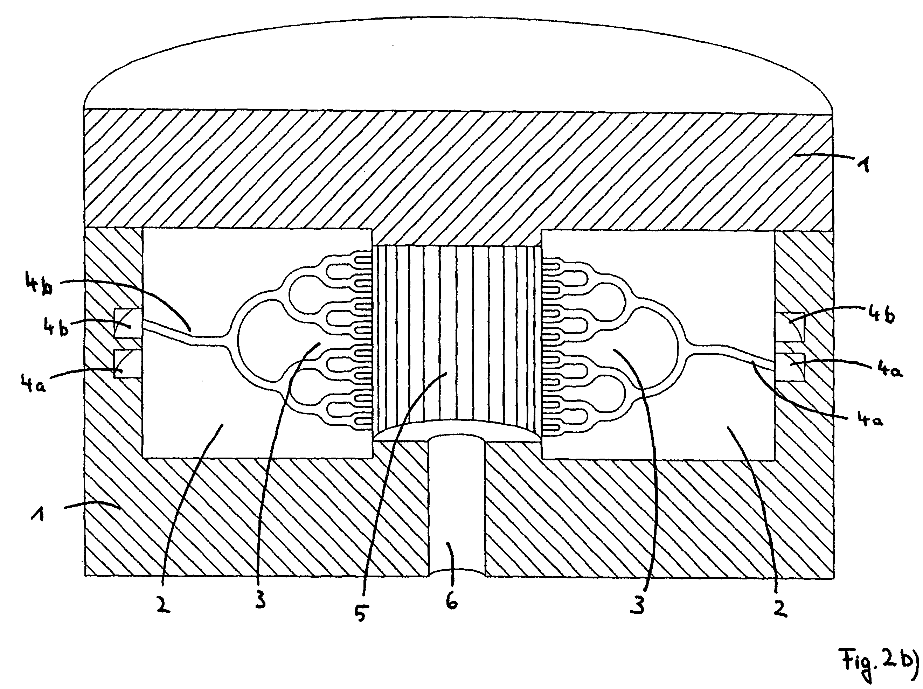

Figur 2b zeigt ein anderes Ausführungsbeispiel des Gehäuses 1, bei dem sich beide Zuführkanäle 4a und b in der gleichen Kreisscheibe wie der Fluidabführungskanal 6 befinden und seitlich um die Zuführungselemente herum im Gehäuse 1 umlaufen.

Figur 2c zeigt ein weiteres Ausführungsbeispiel für sowohl das Gehäuse 1 als auch die Zuführelemente 2. In diesem Fall befinden sich die ringförmig umlaufenden Zuführkanäle 4a und b nicht in den das Gehäuse 1 bildenden Kreisplatten, sondern sind als Durchbohrungen in die Zuführelemente 2 integriert und laufen dort ringförmig um.

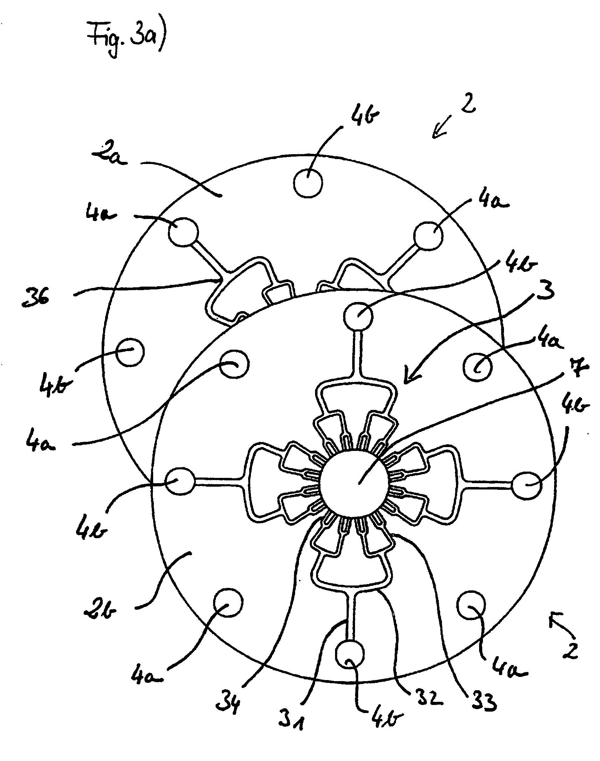

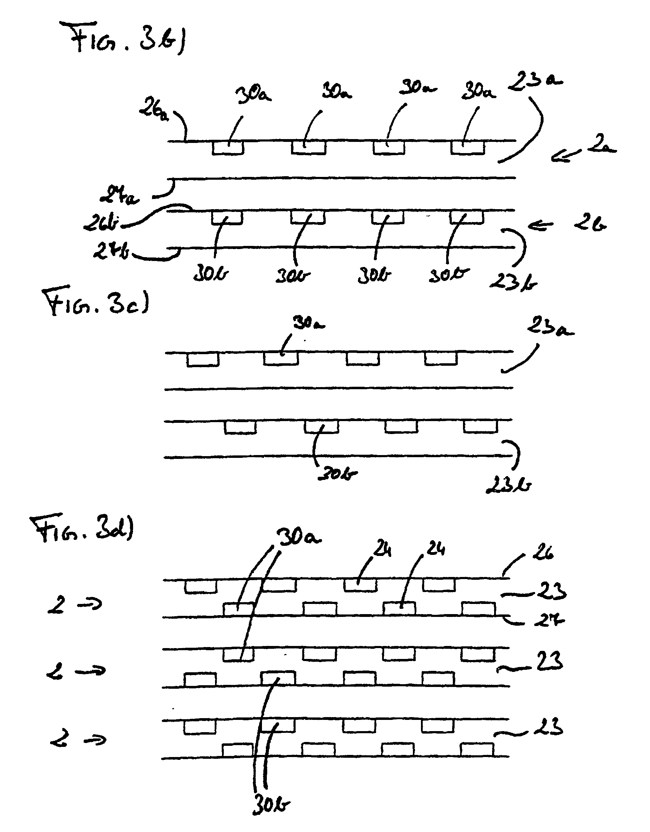

Figur 3a zeigt zwei Zuführelemente 2, die als jeweils eine plane, kreisringförmige Platte 2a,b ausgebildet sind. Die Platte 2b weist in ihrer Mitte eine kreisförmige Durchbrechung 7 auf. Auf ihrem Umfang sind kreisförmige Durchbrechungen angeordnet, die die Zuführkanäle 4a und 4b bilden für die Fluide A und B bilden. Die Zuführkanäle 4b der Platte 2b sind an Bifurkationskaskaden 3 angeschlossen. Von jedem Zuführkanal 4b geht ein Mikrokanal erster Stufe 31 ab, der sich nach einer Bifurkation 36 in zwei Mikrokanäle zweiter Stufe 32 aufteilt, die sich jeweils ihrerseits in 2 + 2 Mikrokanäle dritter Stufe 33 aufteilen usw.. Die Längen der Mikrokanäle 31 bis 34 nehmen mit zunehmender Stufe ab. Die plane Platte 2a ist identisch mit der planen Platte 2b. Sie ist allerdings um 45° zur Platte 2b verdreht. Dadurch kommen die Zuführkanäle 4a der Platte 2a und 2b sowie die Zuführkanäle 4b der Platten 2a und 2b aufeinander zu liegen. Von den Zuführkanälen 4a gehen in der Platte 2a Bifurkationskaskaden 3 für das Fluid A ab. Durch ein Übereinanderstapeln einer Vielzahl von Platten 2a und 2b ergibt sich ein zylinderförmiger Mikromischer.

In den Figuren 3b bis 3d ist gezeigt, wie die Mikrokanäle 30a,30b bildenden Nuten 24 in der Oberseite 26 und/oder der Unterseite 27 einer als plane Platte 2 bzw. 2a,b ausgebildeten Zuführelementes angeordnet sein können. Der Übersichtlichkeit halber sind in den Figuren 3b bis 3d die Platten 2,2a,2b beabstandet zueinander dargestellt. Aus Stabilitätsgründen kann aber auch erwogen werden, zwischen die Zuführelemente zusätzliche Abstandselemente einzuführen, die Durchbrechungen zur Bildung der Mischkammer und der Zuführkanäle aber keine Bifurkationskaskaden aufweisen würden.

In Figur 3b sind sowohl in der Platte 2a als auch in der Platte 2b die Nuten auf der Oberseite 26a bzw. 26b ausgebildet. Die Nuten in der Platte 2a bilden Mikrokanäle 30a für das Fluid A und die Nuten in der Platte 2b bilden Mikrokanäle 30b für das Fluid B. Die Nuten in beiden Platten sind derart angeordnet, daß die Mikrokanäle 30a und 30b genau übereinanderliegen.

Die Nutenanordnung in Figur 3c unterscheidet sich von der Nutenanordnung in Figur 3b lediglich dadurch, daß die Mikrokanäle 30a und 30b zueinander versetzt angeordnet sind. Dadurch wird erreicht, daß der Mikrokanal für das eine Fluid von vier Mikrokanälen für das andere Fluid umgeben ist. Dies erhöht die Mischeffektivität.

Die Zuführelemente 2 aus Figur 3d weisen sowohl auf ihrer Oberseite 26 als auch ihrer Unterseite 27 Nuten 24 auf. Die Nuten 24 weisen jeweils einen Teilquerschnitt der Mikrokanäle 30a und 30b auf und ergänzen sich zum Vollquerschnitt der Mikrokanäle 30a,30b in den aufeinanderliegenden Flächen 26 und 27. Daher sind die Nuten der Oberseite 26 versetzt zu den Nuten der Unterseite 27 angeordnet. Wenn die Teilquerschnitte der einen Seite für das eine Fluid und die Teilquerschnitte der anderen Seite für das andere Fluid genutzt werden, wird dadurch wieder gewährleistet, daß ein Mikrokanal 30a oder 30b für das eine Fluid von vier Mikrokanälen 30b oder 30a umgeben ist.

### Bezugszeichen

- 1: Gehäuse
- 2a,b,c,d,2': Zuführelement
- 3: Fluidführungsstruktur
- 4a,b: Zuführungskanal A,B
- 5: Mischkammer
- 6: Fluidabführungskanal
- 7: Durchbrechung
- 21: Keilfläche
- 22: Keilfläche
- 23: Stirnseite
- 24: Nut
- 25: Schnittfläche
- 26: Oberseite
- 27: Unterseite
- 30a,b: Mikrokanal A,B
- 31: Mikrokanal erster Stufe
- 32: Mikrokanal zweiter Stufe
- 33: Mikrokanal dritter Stufe
- 34: Mikrokanal vierter Stufe
- 36: Bifurkation

## Patentansprüche

1. Statischer Mikrovermischer mit Zuführkammern für mindestens zwei zu vermischende Fluide, von denen Mikrokanäle zu einer Mischkammer führen, wobei die Mikrokanäle in mindestens zwei aneinanderliegenden Zuführelementen angeordnet sind, **dadurch gekennzeichnet,**
**daß** die Zuführelemente (2) keilförmige Platten sind, die mindestens zu einem Ringsektor zusammensetzbar sind, der die Mischkammer (5) bogenförmig umgibt, und
**daß** die für jedes Fluid vorgesehenen Mikrokanäle (30) eine symmetrische mindestens zwei Stufen i (i = 1 bis n, mit n ≥ 2) umfassende Bifurkationskaskade bilden.

2. Mikrovermischer nach Anspruch 1, **dadurch gekennzeichnet, daß** der Querschnitt der Mikrokanäle (30) von Stufe zu Stufe abnimmt.

3. Mikrovermischer nach Anspruch 1 oder 2, **dadurch gekennzeichnet, daß** die Länge der Mikrokanäle (30) von Stufe zu Stufe abnimmt.

4. Mikrovermischer nach einem der Ansprüche 1 bis 3, **dadurch gekennzeichnet, daß** die Bifurkationskaskade selbstähnlich ist.

5. Mikrovermischer nach Anspruch 1, **dadurch gekennzeichnet, daß** der Querschnitt der Mikrokanäle (30) bis zur Stufe n-1 von Stufe zu Stufe abnimmt.

6. Mikrovermischer nach Anspruch 1 oder 5, **dadurch gekennzeichnet, daß** die Länge der Mikrokanäle (30) bis zur Stufe n-1 von Stufe zu Stufe abnimmt.

7. Mikrovermischer nach einem der Ansprüche 1 bis 6, **dadurch gekennzeichnet, daß** mindestens eine keilförmige Platte auf mindestens einer Keilfläche (21,22) Mikrokanäle (30) bildende Nuten (24) aufweist.

8. Mikrovermischer nach Anspruch 7, **dadurch gekennzeichnet, daß** die keilförmige Platte auf beiden Keilflächen (21,22) jeweils eine Bifurkationskaskade aufweist, wobei die an der Stirnseite der Platte mündenden Mikrokanäle (30) der letzten Bifurkationsstufe versetzt zueinander angeordnet sind.

9. Mikrovermischer nach einem der Ansprüche 7 oder 8, **dadurch gekennzeichnet, daß** die Nuten (24) jedes Zuführelementes (2) einen Teilquerschnitt der Mikrokanäle (30) aufweisen und die in den aufeinanderliegenden Flächen befindlichen Nuten (24) sich zum Vollquerschnitt der Mikrokanäle ergänzen.

10. Mikrovermischer nach einem der Ansprüche 5 bis 9, **dadurch gekennzeichnet, daß** der Querschnitt und/oder die Länge der Mikrokanäle (30) von Stufe n - 1 auf Stufe n zunimmt.

11. Mikrovermischer nach einem der Ansprüche 5 bis 10, **dadurch gekennzeichnet, daß** die in die Mischkammer (5) mündenden Mikrokanäle (3a) in Umfangs- oder axialer Richtung der Mischkammer (5) überlappen.

12. Mikrovermischer nach einem der Ansprüche 1 bis 11, **dadurch gekennzeichnet, daß** die Bifurkationskaskaden für jedes Fluid an einem gemeinsamen Zuführungskanal (4a,b) angeschlossen sind.

13. Mikrovermischer nach Anspruch 12, **dadurch gekennzeichnet, daß** der gemeinsame Zuführungskanal (4a,b) in den Zuführelementen (2) angeordnet ist.

14. Mikrovermischer nach Anspruch 12, **dadurch gekennzeichnet, daß** der gemeinsame Zuführungskanal (4a,b) in einem die Zuführelemente (2) umgebenden Gehäuse (1) angeordnet ist.

15. Statischer Mikrovermischer mit Zuführkammern für mindestens zwei zu vermischende Fluide, von denen Mikrokanäle zu einer Mischkammer führen, wobei die Mikrokanäle in mindestens zwei aufeinanderliegenden oder durch ein oder mehrere Zwischenelement(e) voneinander beabstandeten Zuführelementen angeordnet sind, **dadurch gekennzeichnet, daß** die Zuführelemente (2) plane Platten sind, die im mittleren Bereich eine Durchbrechung (7) aufweisen, so daß die übereinandergestapelten Platten die Mischkammer (5) bilden, und daß die für jedes Fluid vorgesehenen Mikrokanäle (30) eine oder mehrere symmetrische, mindestens zwei Stufen i (i = 1 bis n, mit n ≥ 2) umfassende Bifurkationskaskaden bilden.

16. Mikrovermischer nach Anspruch 15, **dadurch gekennzeichnet, daß** die planen Platten kreisringförmig ausgebildet sind.

17. Mikrovermischer nach Anspruch 15 oder 16, **dadurch gekennzeichnet, daß** die Länge der Mikrokanäle (30) von Stufe i zu Stufe i +1 abnimmt.

18. Mikrovermischer nach einem der Ansprüche 15 bis 17, **dadurch gekennzeichnet, daß** die Bifurkationskaskade selbstähnlich ist.

19. Mikrovermischer nach einem der Ansprüche 15 bis 18, **dadurch gekennzeichnet, daß** mindestens eine plane Platte (2) auf mindestens einer ihrer beiden Seiten (26,27) Mikrokanäle (30) bildende Nuten (24) aufweist.

20. Mikrovermischer nach Anspruch 19, **dadurch gekennzeichnet, daß** die plane Platte auf beiden Seiten (26,27) jeweils mindestens eine Bifurkationskaskade aufweist, wobei die in die Durchbrechung (7) der Platte mündenden Mikrokanäle (30) der einen und der anderen Seite (26,27) zueinander versetzt angeordnet sind.

21. Mikrovermischer nach Anspruch 19 oder 20, **dadurch gekennzeichnet, daß** die Nuten (24) jedes Zuführelementes (2) einen Teilquerschnitt der Mikrokanäle (30) aufweisen und die in den aufeinanderliegenden Flächen (26,27) befindlichen Nuten (24) sich zum Vollquerschnitt der Mikrokanäle (30) ergänzen.

22. Mikrovermischer nach einem der Ansprüche 15 bis 21, **dadurch gekennzeichnet, daß** die Bifurkationskaskaden jeweils an einem Zuführkanal (4a,b) angeschlossen sind, die in den Zuführelementen (2) angeordnet sind.

## Claims

1. Static micromixer with supply chambers for at least two fluids to be mixed, from which microchannels lead to a mixing chamber, wherein the microchannels are arranged in at least two supply elements lying next to one another, **characterised in that** the supply elements (2) are wedge-shaped plates, which can be assembled to form at least one annular sector which surrounds the mixing chamber (5) in a curve, and **in that** the microchannels (30) provided for each fluid form a symmetrical bifurcation cascade comprising at least two stages i (i = 1 to n, where n ≥ 2).

2. Micromixer according to claim 1, **characterised in that** the cross-section of the microchannels (30) decreases from stage to stage.

3. Micromixer according to claim 1 or 2, **characterised in that** the length of the microchannels (30) decreases from stage to stage.

4. Micromixer according to one of claims 1 to 3, **characterised in that** the bifurcation cascade is self-similar.

5. Micromixer according to claim 1, **characterised in that** the cross-section of the microchannels (30) decreases from stage to stage up to stage n-1.

6. Micromixer according to claim 1 or 5, **characterised in that** the length of the microchannels (30) decreases from stage to stage up to stage n-1.

7. Micromixer according to one of claims 1 to 6, **characterised in that** at least one wedge-shaped plate has grooves (24) forming microchannels (30) on at least one wedge surface (21, 22).

8. Micromixer according to claim 7, **characterised in that** the wedge-shaped plate has in each case one bifurcation cascade on both wedge surfaces (21, 22), wherein the microchannels (30) of the last bifurcation stage emerging on the end-face of the plate are arranged offset to one another.

9. Micromixer according to one of claims 7 or 8, **characterised in that** the grooves (24) of each supply element (2) have a partial cross-section of the microchannels (30) and the grooves (24) situated in the surfaces lying one on another complement one another to form the full cross-section of the microchannels.

10. Micromixer according to one of claims 5 to 9, **characterised in that** the cross-section and/or the length of the microchannels (30) increases from stage n-1 to stage n.

11. Micromixer according to one of claims 5 to 10, **characterised in that** the microchannels (3a) emerging in the mixing chamber (5) overlap in peripheral or axial direction of the mixing chamber (5).

12. Micromixer according to one of claims 1 to 11, **characterised in that** the bifurcation cascades for each fluid are connected to a common supply channel (4a, b).

13. Micromixer according to claim 12, **characterised in that** the common supply channel (4a, b) is arranged in the supply elements (2).

14. Micromixer according to claim 12, **characterised in that** the common supply channel (4a, b) is arranged in a housing (1) surrounding the supply elements (2).

15. Static micromixer with supply chambers for at least two fluids to be mixed, from which microchannels lead to a mixing chamber, wherein the microchannels are arranged in at least two supply elements lying one on another or spaced from one another by one or more intermediate element(s), **characterised in that** the supply elements (2) are flat plates, which have an opening (7) in the central region, so that the plates stacked one above another form the mixing chamber (5), and **in that** the microchannels (30) provided for each fluid form one or more symmetrical bifurcation cascades comprising at least two stages i (i = 1 to n, where n ≥ 2).

16. Micromixer according to claim 15, **characterised in that** the flat plates are designed to be circular.

17. Micromixer according to claim 15 or 16, **characterised in that** the length of the microchannels (30) decreases from stage i to stage i + 1.

18. Micromixer according to one of claims 15 to 17, **characterised in that** the bifurcation cascade is self-similar.

19. Micromixer according to one of claims 15 to 18, **characterised in that** at least one flat plate (2) has grooves (24) forming microchannels (30) on at least one of its two sides (26, 27).

20. Micromixer according to claim 19, **characterised in that** the flat plate has on both sides (26, 27) in each case at least one bifurcation cascade, wherein the microchannels (30) of the one and the other side (26, 27) emerging in the opening (7) of the plate are arranged offset to one another.

21. Micromixer according to claim 19 or 20, **characterised in that** the grooves (24) of each supply element (2) have a partial cross-section of the microchannels (30) and the grooves (24) situated in the surfaces (26, 27) lying one on another complement one another to form the full cross-section of the microchannels (30).

22. Micromixer according to one of claims 15 to 21, **characterised in that** the bifurcation cascades are connected in each case to a supply channel (4a, b) arranged in the supply elements (2).

## Revendications

1. Micro-mélangeur statique, avec des chambres d'alimentation pour au moins deux fluides à mélanger, d'où des micro-canaux mènent à une chambre de mélange, les micro-canaux étant disposés en au moins deux éléments d'alimentation placés l'un contre l'autre, **caractérisé en ce que**
les éléments d'alimentation (2) sont des plaques cunéiformes pouvant être assemblées en au moins un secteur annulaire, entourant en forme d'arc la chambre de mélange (5), et
les micro-canaux (30) prévus pour chaque fluide forment une cascade de bifurcation symétrique comprenant au moins deux étages i (i=1 à n, n≥2).

2. Micro-mélangeur selon la revendication 1, **caractérisé en ce que** la section des micro-canaux (30) va en diminuant d'un étage à un autre.

3. Micro-mélangeur selon la revendication 1 ou 2, **caractérisé en ce que** la longueur des micro-canaux (30) va en diminuant d'un étage à un autre.

4. Micro-mélangeur selon l'une des revendications 1 à 3, **caractérisé en ce que** la cascade de bifurcation est d'allure reproductible.

5. Micro-mélangeur selon la revendication 1, **caractérisé en ce que** la section transversale des micro-canaux (30) jusqu'à l'étage n-1 va en diminuant d'un étage à un autre.

6. Micro-mélangeur selon la revendication 1 ou 5, **caractérisé en ce que** la longueur des micro-canaux (30) jusqu'à l'étage n-1 va en diminuant d'un étage à un autre.

7. Micro-mélangeur selon l'une des revendications 1 à 6, **caractérisé en ce qu'**au moins une plaque cunéiforme présente des rainures (24) formant des micro-canaux (30) sur au moins une surface de coin (21, 22).

8. Micro-mélangeur selon la revendication 7, **caractérisé en ce que** la plaque cunéiforme présente sur chacune des deux faces de coin (21, 22) une cascade à bifurcation, les micro-canaux (30), débouchant sur la face frontale de la plaque du dernier étage de bifurcation, étant mutuellement décalés.

9. Micro-mélangeur selon l'une des revendications 7 ou 8, **caractérisé en ce que** les rainures (24) de chaque élément d'alimentation (2) présentent une section transversale partielle des micro-canaux (30) et les rainures (24) se trouvant dans les surfaces placées l'une sur l'autre se complètent pour produire la pleine section transversale des micro-canaux.

10. Micro-mélangeur selon l'une des revendications 5 à 9, **caractérisé en ce que** la section transversale et/ou la longueur des micro-canaux (30) de l'étage n-1 à l'étage n va en augmentant.

11. Micro-mélangeur selon l'une des revendications 5 à 10, **caractérisé en ce que** les micro-canaux (3a) débouchant dans la chambre de mélange (5) se chevauchent en direction angulaire ou axiale de la chambre de mélange (5).

12. Micro-mélangeur selon l'une des revendications 1 à 11, **caractérisé en ce que** les cascades de bifurcation de chaque fluide sont raccordées à un canal d'alimentation (4a, b) commun.

13. Micro-mélangeur selon la revendication 12, **caractérisé en ce que** le canal d'alimentation (4a, b) commun est disposé dans les éléments d'alimentation (2).

14. Micro-mélangeur selon la revendication 12, **caractérisé en ce que** le canal d'alimentation (4a, b) commun est disposé dans un boîtier (1) entourant les éléments d'alimentation (2).

15. Micro-mélangeur statique comportant des chambres d'alimentation pour au moins deux fluides à mélanger, d'où des micro-canaux mènent à une chambre de mélange, les micro-canaux étant disposés en au moins deux éléments d'alimentation, placés l'un sur l'autre ou espacés l'un de l'autre par un ou plusieurs éléments intermédiaires, **caractérisé en ce que** les éléments d'alimentation (2) sont des plaques planes présentant dans la zone centrale une traversée (7), de sorte que les plaques empilées les unes au-dessus des autres forment la chambre de mélange (5), et **en ce que** les micro-canaux (30) prévus pour chaque fluide forment une ou plusieurs cascades à bifurcation symétrique comprenant au moins deux étages i (i=1 à n, n≥2).

16. Micro-mélangeur selon la revendication 15, **caractérisé en ce que** les plaques planes sont en forme d'anneau de cercle.

17. Micro-mélangeur selon la revendication 15 ou 16, **caractérisé en ce que** la longueur des canaux (30) va en diminuant de l'étage i à l'étage i+1.

18. Micro-mélangeur selon l'une des revendications 15 à 17, **caractérisé en ce que** la cascade de bifurcation est d'allure reproductible.

19. Micro-mélangeur selon l'une des revendications 15 à 18, **caractérisé en ce qu'**au moins une plaque plane (2) présente des rainures (24) formant des micro-canaux (30) sur au moins l'une de ses deux faces (26, 27).

20. Micro-mélangeur selon la revendication 19, **caractérisé en ce que** la plaque plane présente sur chacune de ses deux faces (26, 27) au moins une cascade à bifurcation, les micro-canaux (30) débouchant dans la traversée (7) de la plaque de l'une et de l'autre face (26, 27) étant décalés les uns par rapport aux autres.

21. Micro-mélangeur selon la revendication 19 ou 20, **caractérisé en ce que** les rainures (24) de chaque élément d'alimentation (2) présentent une section transversale des micro-canaux (30) et les rainures (24) se trouvant dans les faces (26, 27), placées l'une sur l'autre, se complètent pour donner la pleine section transversale des micro-canaux (30).

22. Micro-mélangeur selon l'une des revendications 15 à 21, **caractérisé en ce que** les cascades à bifurcation sont chacune raccordées à un canal d'alimentation (4a, b), disposé dans les éléments d'alimentation (2).
